# FASCICULE DE BREVET EUROPEEN

(11) **EP 2 604 088 B1**
(45) Date de publication et mention de la délivrance du brevet: **09.08.2017**
(21) Numéro de dépôt: 11730984.9
(22) Date de dépôt: 12.07.2011
(51) Int. Cl.: H05B 3/26, H05B 3/50, F24H 3/00

(54) **BLOC DE CHAUFFE POUR RADIATEUR ÉLECTRIQUE DE CHAUFFAGE**
HEIZBLOCK FÜR EINEN ELEKTRISCHEN HEIZSTRAHLER
HEATER BLOCK FOR ELECTRIC HEATING RADIATOR

(30) Priorité: 11.08.2010 FR 1003338
(43) Date de publication de la demande: 19.06.2013
(73) Titulaire: Valeo Systèmes Thermiques, 78320 Le Mesnil-Saint-Denis (FR)
(72) Inventeur: PIERRON, Frédéric, F-78322 Le Mesnil Saint-Denis cédex (FR); TELLIER, Laurent, F-78322 Le Mesnil Saint-Denis cédex (FR)
(86) Numéro de dépôt international: PCT/EP2011/061895
(87) Numéro de publication internationale: WO 2012/019854

(56) Documents cités:
- EP-A2- 0 352 499
- WO-A1-2007/071335
- US-A- 5 444 228
- US-A1- 2003 095 795

## Description

Le secteur technique de la présente invention est celui des dispositifs ou radiateurs de chauffage électrique équipant une installation de ventilation, chauffage et/ou climatisation d'un véhicule automobile. Ces dispositifs chauffent un flux d'air qui circule dans cette installation et l'invention vise plus particulièrement le bloc de chauffe constitutif d'un tel dispositif.

Les véhicules automobiles sont aujourd'hui couramment équipés d'un radiateur de chauffage électrique dont la fonction est de fournir des calories au flux d'air envoyé dans l'habitacle du véhicule par l'installation de ventilation, chauffage et/ou climatisation. Le chauffage de ce flux d'air est principalement assuré par un radiateur classique traversé par un fluide caloporteur dont la mise en température est dépendante de la température d'un moteur à combustion équipant le véhicule. Cependant, les moteurs à combustion interne sont de plus en plus efficaces et leur montée en température devient de plus en plus lente.

En parallèle, le confort de l'utilisateur du véhicule impose une montée en température de l'habitacle la plus rapide possible. Cette opposition de contraintes a amené les constructeurs d'installation de ventilation et chauffage à recourir à un radiateur électrique qui permet de chauffer très rapidement le flux d'air et ainsi atteindre le niveau de confort souhaité par l'utilisateur du véhicule.

Les radiateurs électriques connus de l'art antérieur, tels que décrits dans WO2007/071335A1 ou dans US 2003/095795A1, utilisent un bloc de chauffe constitué d'une grande quantité de pièces telles que des résistances chauffantes, des ailettes de refroidissement, des ressorts de maintien, etc... Le bloc de chauffe ainsi constitué est maintenu dans un cadre. Une telle conception implique un grand nombre de pièces, des opérations d'assemblage complexes et l'intervention de plusieurs fabricants de pièces. On comprend donc que la complexité de conception et d'assemblage de tels radiateurs grèvent le coût de la fonction chauffage électrique. Il convient donc de trouver une nouvelle solution de chauffage électrique de réalisation et d'assemblage simples et dont le coût de fabrication est plus faible que les solutions de l'art antérieur.

Le but de la présente invention est donc de résoudre les inconvénients décrits ci-dessus principalement en concevant un nouveau type de bloc de chauffe pour radiateur électrique utilisant un ou des éléments chauffants sérigraphiés sur un support thermoconducteur qui échange avec le flux d'air traversant l'installation de ventilation et chauffage.

L'invention a donc pour objet un bloc de chauffe d'un radiateur électrique de chauffage d'un flux d'air circulant dans une installation de ventilation et chauffage d'un véhicule, dans lequel un élément thermoconducteur comprend au moins un trou traversée par le flux d'air à chauffer, caractérisé en ce qu'il comprend au moins une élément chauffant sérigraphié sur au moins une première face dudit élément thermoconducteur. L'élément thermoconducteur est de préférence un élément plan installé au travers du flux d'air et qui sert de support pour recevoir l'élément chauffant sérigraphié sur se face. L'élément chauffant présente une fonction de transformation de l'énergie électrique en effet joule alors que l'élément thermoconducteur présente une fonction de support mécanique de l'élément chauffant combinée à une fonction de dissipation dans le flux d'air de l'effet joule généré par l'élément chauffant.

Selon l'invention, l'élément chauffant sérigraphié présente une épaisseur comprise entre 0,05 et 0,20 mm.

Selon une caractéristique avantageuse de l'invention, la première face est perpendiculaire à la direction du flux d'air qui traverse le bloc de chauffe. On comprend donc que, de manière préférentielle, le flux d'air traverse le bloc de chauffe et que le flux d'air ne se limite pas simplement à lécher la première face.

Dans un exemple de réalisation, l'élément thermoconducteur prend la forme d'une plaque métallique d'épaisseur comprise entre 0,8 et 1,2 mm. Ceci est particulièrement avantageux car cette épaisseur est notoirement plus faible que les radiateurs de l'art antérieur ce qui facilite l'intégration d'un radiateur électrique équipé d'un tel bloc de chauffe dans une installation de ventilation et chauffage.

L'échange avec le flux d'air se trouve favorisé quand l'élément thermoconducteur, avantageusement la plaque métallique, comprend une pluralité de trous.

Selon une autre caractéristique de l'invention, le bloc de chauffe comprend une multiplicité d'éléments chauffants sérigraphiés indépendants, par exemple sur une même première face ou encore sur les deux faces perpendiculaires au flux d'air et constitutives de la plaque métallique. Il est ainsi possible de fournir un radiateur de chauffage comportant des zones contrôlables de manière indépendante ce qui convient tout particulièrement à une installation de ventilation et chauffage bi-zones (droite/gauche de l'habitacle), tri-zones (droite/gauche et arrière de l'habitacle) ou quadri-zones (avant droit/avant gauche, arrière droit/arrière gauche de l'habitacle).

On comprend donc que les éléments chauffants sérigraphiés sont distincts les uns par rapport aux autres et avantageusement commandés de manière indépendante.

Selon encore une caractéristique de l'invention, une couche diélectrique primaire est intercalée entre la première face de l'élément thermoconducteur et l'élément chauffant sérigraphié. Cette couche diélectrique garantit l'absence de court-circuit électrique quand l'élément thermoconducteur utilisé est aussi conducteur d'électricité.

Une couche diélectrique secondaire est également prévue pour couvrir l'élément chauffant sérigraphié. En plus de son rôle d'isolant électrique, cette couche assure une fonction de protection mécanique pour protéger la piste formée par l'élément chauffant sérigraphié contre les agressions externes.

Selon encore une autre caractéristique de l'invention, l'élément chauffant sérigraphié présente au moins une propriété ou caractéristique CTP. On entend par CTP (Coefficient de Température Positif) le fait que l'intensité du courant qui parcourt l'élément chauffant diminue au fur et à mesure que sa température augmente. L'élément chauffant est ainsi autorégulé en température.

Avantageusement, l'élément thermoconducteur comprend au moins une excroissance sur laquelle est sérigraphié une borne ou terminal d'alimentation de l'élément chauffant. On comprend donc que l'élément chauffant et ses bornes sont fabriqués pendant une même opération de sérigraphie.

L'excroissance est issue de l'élément thermoconducteur et s'étend dans un plan parallèle à l'élément thermoconducteur. La plaque métallique plane présente ainsi une cosse qui déborde de la plaque et sur laquelle sont installées les extrémités de la piste sérigraphiée formant l'élément chauffant.

Selon une particularité de l'invention, le bloc de chauffe supporte un moyen de détection de la température de l'élément chauffant solidarisé sur l'élément thermoconducteur. Avantageusement, le moyen de détection est installé directement adjacent à la piste formant l'élément de chauffage de sorte à détecter sa température sans élément intermédiaire.

Le moyen de détection est plus spécifiquement solidarisé sur la première face de l'élément thermoconducteur qui reçoit l'élément chauffant sérigraphié.

Avantageusement encore, l'élément thermoconducteur présente une première extrémité et une seconde extrémité opposée à la première extrémité par rapport audit trou, la seconde extrémité comprend un talon et la première extrémité comporte au moins l'excroissance ainsi qu'un dispositif de réception d'un module de commande du bloc de chauffe ou un socle pour recevoir un connecteur. L'élément thermoconducteur étant formé par une plaque, ses tranches forment deux extrémités opposées quand elles sont situées de part et d'autre de la pluralité de trous formée au centre de l'élément thermoconducteur. Le talon est surmoulé sur l'extrémité de sorte à former un dispositif pour fixer et centrer le radiateur quand ce dernier est monté dans l'installation. L'extrémité opposée au talon comporte aussi un dispositif de réception ou un socle, avantageusement surmoulé sur l'élément thermoconducteur, qui sert de support pour maintenir et fixer un module de commande du radiateur ou un connecteur en provenance du réseau électrique du véhicule.

L'invention vise également un radiateur de chauffage électrique pour véhicule automobile qui comprend un bloc de chauffe tel que décrit ci-dessus.

Dans un tel radiateur, le fonctionnement du bloc de chauffe est placé sous la dépendance d'un module de commande solidarisé sur l'élément thermoconducteur, en particulier sur le dispositif de réception qui équipe l'élément thermoconducteur. Ce module de commande gère la stratégie de commande du radiateur ainsi que la fourniture de la puissance électrique nécessaire au fonctionnement du radiateur.

Préférentiellement, le module de commande comprend un circuit imprimé comportant au moins une zone de connexion électrique, au moins une excroissance de l'élément thermoconducteur coopérant avec la zone de connexion électrique. Le circuit imprimé connu sous l'acronyme « PCB » de l'anglais Printed Circuit Board est une plaque recevant un routage électrique et des composants électroniques.

Avantageusement, la zone de connexion prend la forme d'une ouverture traversant le circuit imprimé, ladite excroissance s'étendant au travers de l'ouverture.

Enfin, on notera que le contrôle du module de commande est placé sous la dépendance du moyen de détection de température de l'élément chauffant sérigraphié.

Un tout premier avantage selon l'invention réside dans la simplification de la conception du bloc de chauffe. Cette simplification se traduit par un nombre de pièces notoirement inférieur au bloc de chauffe de l'art antérieur ce qui permet de mettre en place un procédé de fabrication comprenant un nombre d'étapes restreint. Cette simplification se traduit par un abaissement du coût de conception et de fabrication d'un tel bloc de chauffe.

Un autre avantage résulte de la faible épaisseur du bloc de chauffe. Cela permet d'intégrer plus facilement le radiateur équipé de l'invention en des zones du boîtier de l'installation de ventilation et chauffage où dans l'art antérieur il n'était pas possible de le monter.

D'autres caractéristiques, détails et avantages de l'invention ressortiront plus clairement à la lecture de la description donnée ci-après à titre indicatif en relation avec des dessins dans lesquels :
- la figure 1 est une vue de face d'un bloc de chauffe selon l'invention,
- la figure 2 est une vue de face d'une première variante du bloc de chauffe selon l'invention,
- la figure 3 est une vue de face d'une deuxième variante du bloc de chauffe selon l'invention,
- la figure 4 est une vue face d'une troisième variante du bloc de chauffe selon l'invention,
- la figure 5 est une vue face d'une quatrième variante du bloc de chauffe selon l'invention,
- la figure 6 est un agrandissement vue de dessus de la zone de connexion entre le bloc de chauffe et le circuit imprimé.

Il faut noter que les figures exposent l'invention de manière détaillée, lesdites figures peuvent bien entendu servir à mieux définir l'invention le cas échéant.

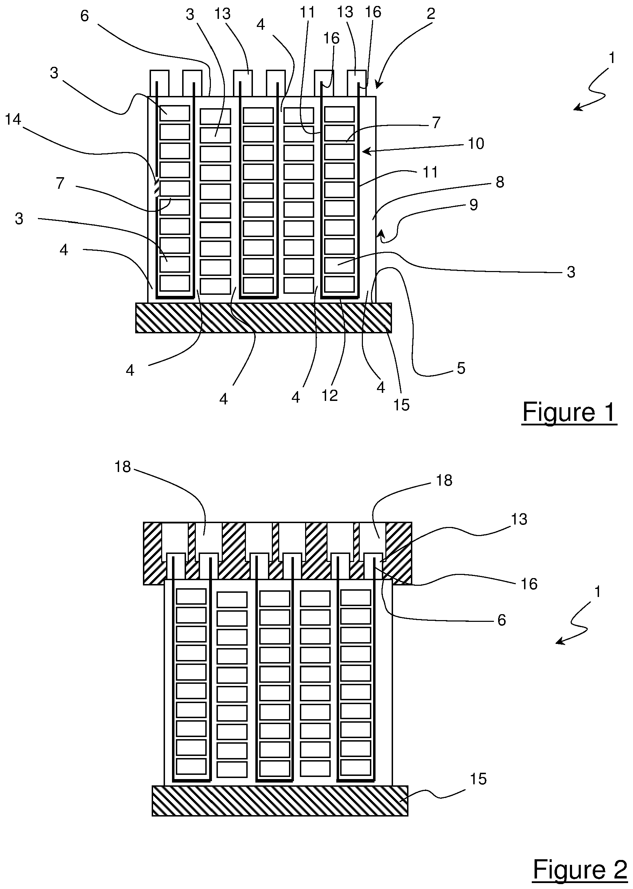

La figure 1 illustre montre un exemple de réalisation du bloc de chauffe 1 selon l'invention. Un élément thermoconducteur 2 comprend des ouvertures ou trous 3 organisés en cinq rangées rectilignes. Dans cet exemple de réalisation, chacune des rangées comprend dix trous de forme identique et alignés sur un même axe. Entre chacune de ces rangées ainsi qu'à l'extérieur des rangées situées au bord de l'élément thermoconducteur, on trouve des travées 4 qui s'étendent d'une première extrémité 5 à une deuxième extrémité 6. Un pont 7 formé par l'élément thermoconducteur 2 est également présent entre chaque trou 3 adjacent.

Ces trous 3 délimitent des fenêtres de passage pour la circulation d'un flux d'air au travers de l'élément thermoconducteur 2. On comprend donc que la direction du flux d'air est perpendiculaire au plan de la figure 1.

L'élément thermoconducteur est formé d'une plaque métallique d'épaisseur comprise entre 0,8 et 1,2 mm alors que sa surface perpendiculaire au flux d'air est comprise entre 100 et 500 cm². On comprend donc qu'il s'agit là d'une plaque de faible épaisseur comparée à ses autres dimensions telles que sa longueur ou sa largeur. Le matériau utilisé pour cette plaque est avantageusement un aluminium ou un alliage d'aluminium. Il ne s'agit là que d'un exemple de réalisation car l'élément thermoconducteur peut être fabriqué à partir de tout matériau présentant des propriétés aptes à conduire ou transporter les calories par conduction, convection ou rayonnement par exemple.

L'élément thermoconducteur 2 est délimité par une première face 8 et une seconde face 9 orientées perpendiculairement au flux d'air. La première face 8 sert de support pour recevoir au moins un élément chauffant 9. Bien entendu, l'invention couvre aussi le cas où la première face 8 ainsi que la deuxième face 9 reçoivent simultanément au moins un élément chauffant 10. La description qui suit sera effectuée en rapport avec une seule face de l'élément thermoconducteur mais il va de soit que cette description s'applique en tout point à des éléments chauffants sérigraphiés sur chaque face de l'élément thermoconducteur.

L'élément chauffant est sérigraphié sur la face 8 de l'élément thermoconducteur de sorte à former une piste résistive et chauffante qui circule sur la face 8, par exemple entre les trous 3. Dans l'exemple de réalisation de la figure 1, le bloc de chauffe 1 comporte trois éléments chauffants sérigraphiés 10. Chaque élément chauffant est ici formé de deux branches 11 jointes par une base 12 perpendiculaire aux branches 11. Les branches 11 sont chacune sérigraphiées sur une travée 4 et la base 12 est quant à elle sérigraphiée entre le dernier trou 3 d'une rangée et la première extrémité 5. Cette conformation de l'élément chauffant entoure une rangée de trous 3 et on constate que la rangée centrale de trous 3 et les deux rangées de trous 3 qui bordent l'élément thermoconducteur 2 sont entourées de la sorte. En revanche, les rangées de trous 3 situées entre la rangée centrale de trous 3 et les deux rangées de trous 3 qui bordent l'élément thermoconducteur 2 sont dépourvues d'élément chauffant 10. Cette structure permet d'obtenir des éléments chauffants sérigraphiés distincts ou indépendants les uns des autres.

L'un des éléments chauffants sérigraphiés 10, ou éventuellement tous les éléments chauffants sérigraphiés 10, peut comprendre une zone de coupure électrique 14. Cette dernière est également sérigraphiée sur l'élément thermoconducteur 2 au niveau d'une branche 11 de l'élément chauffant 2. La zone de coupure 14 présente une fonction d'interruption du courant circulant dans l'élément chauffant en cas de surintensité résultant par exemple d'un court-circuit. En pratique, la zone de coupure 14 est formée par une partie de la piste résistive de l'élément chauffant sérigraphié 10 dont les dimensions sont réduites par rapport au reste de la piste résistive. A titre d'exemple, il s'agit d'une réduction de l'épaisseur ou de la largeur de la zone de coupure comparativement au reste de la piste de l'élément chauffant sérigraphié 10. Alternativement, cette zone de coupure peut être réalisée par un matériau différent du matériau constituant le reste de l'élément chauffant, ce matériau présentant une propriété de fusion à une température donnée.

Alternativement, la fonction d'interruption du courant est réalisée par un fusible soudé ou brasé sur la piste de l'élément chauffant sérigraphié ou par une soudure eutectique qui fait partie de la piste.

De manière complémentaire, l'invention prévoit de souder ou braser sur la piste de l'élément chauffant sérigraphié 10 des composants électroniques.

La deuxième extrémité 6 de l'élément thermoconducteur 2 présente au moins une excroissance 13. Dans l'exemple de la figure 1, l'élément thermoconducteur 2 comporte six excroissances 13. Une excroissance est formée par le même matériau que le matériau utilisé pour former les travées 4 et les ponts 7 de l'élément thermoconducteur 2. Cette excroissance débouche de la tranche formée par l'épaisseur de l'élément thermoconducteur 2 au niveau de la deuxième extrémité 6. Dans cet exemple de réalisation, l'excroissance 13 s'étend dans un plan parallèle au plan de l'élément thermoconducteur 2. Au surplus, le plan de l'excroissance 13 et le plan de l'élément thermoconducteur 2 peuvent être confondus.

On notera que l'élément chauffant est également sérigraphié sur l'excroissance 13 sous la forme d'au moins une borne d'alimentation 16. L'excroissance ainsi sérigraphié est un contact pour alimenter en électricité l'élément chauffant 10 et permet ainsi de raccorder soit directement, soit par l'intermédiaire d'un module de commande le radiateur avec le réseau électrique du véhicule. Chaque élément chauffant sérigraphié 10 comprend au moins deux bornes d'alimentation 16 sérigraphié chacune sur une excroissance 13 distinct.

La première extrémité 5 comprend un talon 15 dont la fonction est d'assurer l'accostage et l'installation du radiateur dans le boîtier de l'installation de ventilation et chauffage. Ce talon est fabriqué en un matériau plastique et est avantageusement moulé ou surmoulé sur la première extrémité 5 de sorte à garantir une liaison mécanique fiable entre le talon 15 et l'élément thermoconducteur 2.

Entre l'élément chauffant 10 et la première face 8 de l'élément thermoconducteur 2 est prévue une couche diélectrique primaire qui interdit un court-circuit électrique de l'élément chauffant sérigraphié 10, notamment entre ses deux bornes d'alimentation 16. Cette couche diélectrique primaire présente une épaisseur totale comprise entre 0,07 et 0,150 mm, cette couche pouvant résulter d'une multiplicité de couches vitrifiées les unes sur les autres chacune d'une épaisseur comprise entre 0,015 et 0,050 mm. Cette couche diélectrique primaire trouve une application particulière dans le cas où l'élément thermoconducteur est également conducteur d'électricité.

Une fois que l'élément chauffant 10 est sérigraphié sur l'élément thermoconducteur 2, il est prévu une couche diélectrique secondaire qui couvre au moins l'élément chauffant 10 et avantageusement toute la première face de l'élément thermoconducteur servant de support à la piste de l'élément chauffant. Son épaisseur est comprise entre 0,015 et 0,050 mm et plusieurs couches vitrifiées les unes après les autres peuvent se superposer pour atteindre une épaisseur totale comprise entre 0,07 et 0,150 mm.

La sérigraphie de l'élément chauffant 10 sur la première face 8 de l'élément thermoconducteur est pratiquée comme suit :
- on dépose une couche diélectrique primaire sur la face de l'élément thermoconducteur qui sert de support à l'élément chauffant 10,
- on vitrifie la couche diélectrique primaire, par exemple par passage dans un four,
- on dépose la piste résistive de l'élément chauffant 10 sur la face de l'élément thermoconducteur, par exemple à l'aide d'un masque délimitant la forme de la piste,
- on solidifie la piste résistive de l'élément chauffant 10, par exemple en la cuisant pas passage dans un four,
- on dépose une couche diélectrique secondaire au moins sur l'élément chauffant 10 et avantageusement sur toute la surface de l'élément thermoconducteur 2
- on vitrifie la couche diélectrique secondaire, par exemple par passage dans un four.

Les étapes de dépose et vitrification des couches diélectrique ainsi que l'étape de dépose de la piste résistive de l'élément chauffant 10 peuvent être répétées en vue d'atteindre la puissance de chauffage requise ou une protection diélectrique et/ou mécanique suffisante.

Le matériau constitutif de L'élément chauffant 10 contient de l'Argent ou une combinaison d'Argent et de Palladium et sa puissance peut atteindre 75 Watts au cm². Dans une alternative, le matériau constitutif de l'élément chauffant présente des propriétés CTP où une auto-régulation intervient au niveau de l'élément chauffant entre sa température et l'intensité du courant qui le parcourt.

La figure 2 illustre un radiateur électrique de chauffage équipé du bloc de chauffe 1 décrit ci-dessus. La deuxième extrémité 6 est moulée ou surmoulée par un dispositif de raccordement électrique 17 fabriqué dans un matériau plastique. Ce dispositif de raccordement électrique 17 assure l'accostage dans le boîtier de l'installation de ventilation et chauffage. Ce dispositif de raccordement électrique 17 surmoulé sur l'élément thermoconducteur 2 comprend également au moins un évidement ou puits 18 à l'intérieur duquel débouche l'excroissance 13 et sa borne d'alimentation 16 sérigraphié. L'évidement 18 est conformer pour recevoir une extrémité de câble en provenance du réseau électrique du véhicule et ainsi alimenter chaque élément chauffant 10. Dans cette variante, le radiateur comprend le bloc de chauffe 1, le talon 15 et le dispositif de raccordement 17 tous deux moulés ou surmoulés sur l'élément thermoconducteur 2. Dans ce cas, le dispositif de raccordement 17 raccorde directement les éléments chauffants 10 au réseau électrique de puissance disponible sur le véhicule, la stratégie de commande du radiateur étant assurée pour un composant indépendant du radiateur.

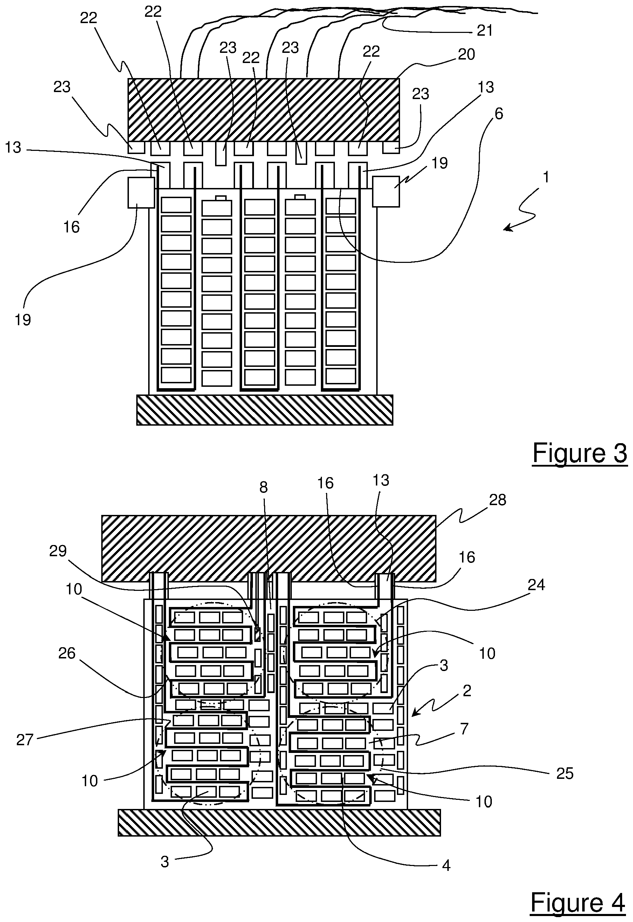

La figure 3 montre un exemple de réalisation du radiateur. Le bloc de chauffe 1 est conforme à celui décrit en référence à la figure 1. La deuxième extrémité 6 comprend un socle 19 moulé ou surmoulé sur cette dernière. Ce socle 19 présente une fonction d'accostage et de centrage du radiateur quand celui-ci est installé dans le boîtier d'une installation de ventilation et chauffage. Ce socle 19 sert aussi de moyen de fixation pour solidariser un connecteur 20 équipé de ses câbles d'alimentation 21, ce connecteur faisant par exemple parti du réseau électrique du véhicule. Le socle 19 comprend des points de fixation 23 qui permettent de fixer mécaniquement le connecteur 20 sur le socle 19 pour éviter tout mouvement relatif entre le socle et le connecteur nuisible aux connexions électriques.

On notera que les excroissances 13 ainsi que leur borne d'alimentation 16 sont accessibles dans le socle 19 pour une connexion avec des cosses 22 constitutives du connecteur 20. En pratique, ces cosses 22 forment chacune une pince qui vient emprisonner l'excroissance 13 issue de l'élément thermoconducteur 2 et fait contact contre la ou les bornes d'alimentation 16.

La figure 4 montre une variante du bloc de chauffe où ce dernier comprend des zones distinctes de chauffage. Le bloc de chauffe comprend au moins deux zones adjacentes et distinctes, chacune de ces zones supportant un élément chauffant sérigraphié distinct. En pratique, l'élément chauffant sérigraphié d'une zone est indépendant de celui équipant la zone adjacente ce qui permet de commander le radiateur de chauffage selon différentes allure de chauffe ou de le rendre compatible avec une installation de ventilation et chauffage où la température peut être contrôlée indépendamment d'une zone à l'autre, par exemple droite/gauche.

Dans l'exemple de réalisation montré sur la figure 4, le bloc de chauffe comprend quatre zones distinctes référencées 24, 25, 26 et 27 pour une zone avant droite, une zone arrière droite, une zone avant gauche et une zone arrière gauche de l'habitacle du véhicule. Chaque zone 24, 25, 26 et 27 reçoit un élément chauffant 10. La piste résistive de chaque l'élément chauffant 10 chemine entre les trous 3 en passant sur les ponts 17 et sur les travées 4. La piste présente ainsi une forme de zig-zag.

L'élément thermoconducteur 2 reçoit au niveau de sa deuxième extrémité 6 un module de commande 28 dont la fonction est de gérer le fonctionnement de chaque élément chauffant 10. Ce module de commande 28 reçoit l'alimentation électrique en provenance du réseau du véhicule pour fournir la puissance électrique nécessaire au fonctionnement des éléments chauffants 10 ainsi qu'un signal de commande, par l'intermédiaire d'un réseau multiplexé du véhicule tel que le CAN ou le LIN. La fourniture de cette puissance électrique est placée sous la dépendance d'un circuit de contrôle intégré au module de commande 28, ce circuit de contrôle recevant le signal et mettant en oeuvre la stratégie de pilotage des éléments chauffants 10. En pratique, ce circuit de contrôle prend la forme d'un circuit imprimé supportant les composants électroniques requis pour mettre en oeuvre la stratégie de pilotage.

Un moyen de détection 29 de la température de l'élément chauffant est solidarisé sur l'élément thermoconducteur 2. Plus particulièrement, ce moyen de détection 29 de la température est fixé sur la face de l'élément thermoconducteur 2 qui reçoit l'élément chauffant 10. Ce moyen de détection 29 de la température est installé directement adjacent à une piste résistive formant l'élément chauffant en étant par exemple collé sur la première face 8 de l'élément thermoconducteur. Le moyen de détection est relié électriquement avec le module de commande 28 et ce dernier prend en compte cette information de température dans la stratégie de pilotage des éléments chauffants 10. Le bloc de chauffe peut comporter autant de moyen de détection 29 de la température que d'élément chauffant de sorte à ajuster au mieux le contrôle de l'élément chauffant concerné. Ce moyen de détection prend par exemple la forme d'un capteur NTC.

On notera enfin que chaque excroissance 13 supporte deux bornes d'alimentation 16 d'un même élément chauffant 10.

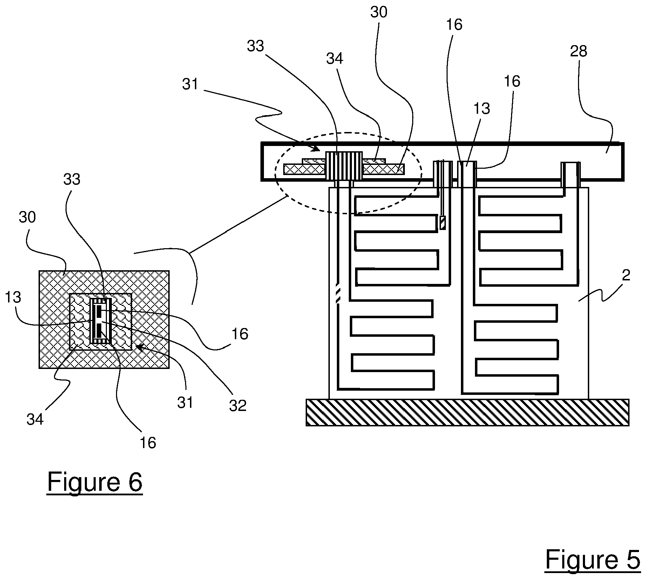

Les figures 5 et 6 montrent des détails relatifs à la connexion électrique entre le module de commande 28 et l'élément thermoconducteur 2, notamment entre le circuit imprimé 30 constitutif du module de commande 28 et les excroissances 13 supportant les bornes d'alimentation 16.

Le circuit imprimé 30 s'étend dans un plan perpendiculaire au plan de l'élément thermoconducteur 2. Ce circuit comprend au moins une zone de connexion électrique 31 qui coopère avec au moins une excroissance 13 de l'élément thermoconducteur 2. Le circuit imprimé 30 est donc installé en interférence avec l'élément thermoconducteur 2 au niveau des excroissances 13.

La zone de connexion 31 prend la forme d'une ouverture 32 traversant le circuit imprimé 30 et dans laquelle l'excroissance 13 s'étend. La zone de connexion 31 comprend également un plot de connexion 33 soudé sur le circuit imprimé 30 au moyen d'un point de soudage 34. Ce plot de connexion 33 établit le contact électrique avec les bornes d'alimentation 16 sérigraphiées sur l'excroissance 13. Grâce à cette structure, il est ainsi aisé de raccorder électriquement et de manière fiable le circuit de puissance du module de commande 28 avec l'élément chauffant 10.

La figure 5 illustre une seule zone de connexion 31 mais il va de soit que le circuit imprimé peut être pourvu d'autant de zone de connexion 31 que d'excroissance 13.

## Revendications

1. Bloc de chauffe (1) d'un radiateur électrique de chauffage d'un flux d'air circulant dans une installation de ventilation et chauffage d'un véhicule, dans lequel un élément thermoconducteur (2) comprend au moins un trou (3) traversée par le flux d'air à chauffer, **caractérisé en ce qu'**il comprend au moins une élément chauffant sérigraphié (10) sur au moins une première face (8) dudit élément thermoconducteur (2), l'élément chauffant sérigraphié (10) présentant une épaisseur comprise entre 0,05 et 0,20 mm.

2. Bloc de chauffe selon la revendication 1, dans lequel la première face (8) est perpendiculaire à la direction du flux d'air qui traverse le bloc de chauffe (1).

3. Bloc de chauffe selon l'une quelconque des revendications 1 à 2, dans lequel l'élément thermoconducteur (2) prend la forme d'une plaque métallique d'épaisseur comprise entre 0,8 et 1,2 mm, le bloc de chauffe comprenant une couche diélectrique primaire intercalée entre la première face (8) de l'élément thermoconducteur (2) et l'élément chauffant sérigraphié (10).

4. Bloc de chauffe selon l'une quelconque des revendications précédentes, dans lequel sont prévues une pluralité de trous (3) et une multiplicité d'éléments chauffants sérigraphiés (10).

5. Bloc de chauffe selon l'une quelconque des revendications précédentes, comprenant une couche diélectrique secondaire qui couvre l'élément chauffant sérigraphié (10).

6. Bloc de chauffe selon l'une quelconque des revendications précédentes, dans lequel l'élément thermoconducteur (2) comprend au moins une excroissance (13) sur laquelle est sérigraphiée une borne d'alimentation (16) de l'élément chauffant sérigraphié (10).

7. Bloc de chauffe selon la revendication 6, dans lequel l'excroissance (13) est issue de l'élément thermoconducteur (2) et s'étend dans un plan parallèle à l'élément thermoconducteur (2), l'excroissance (13) recevant au moins deux bornes d'alimentation (16) de l'élément chauffant sérigraphié (10).

8. Bloc de chauffe selon l'une quelconque des revendications précédentes, dans lequel un moyen de détection (29) de la température de l'élément chauffant sérigraphié (10) est solidarisé sur l'élément thermoconducteur (2).

9. Radiateur de chauffage électrique pour véhicule automobile, **caractérisé en ce qu'**il comprend un bloc de chauffe (1) selon l'une quelconque des revendications précédentes.

10. Radiateur selon la revendication 9, **caractérisé en ce que** le fonctionnement du bloc de chauffe (1) est placé sous la dépendance d'un module de commande (28) solidarisé sur l'élément thermoconducteur (2).

11. Radiateur selon la revendication 10, dans lequel le module de commande (28) comprend un circuit imprimé (30) comportant au moins une zone de connexion électrique (31) avec laquelle au moins une excroissance (13) de l'élément thermoconducteur (2) coopère.

12. Radiateur selon la revendication 11, dans lequel la zone de connexion (31) prend la forme d'une ouverture (32) traversant le circuit imprimé (30), ladite excroissance (13) s'étendant au travers de l'ouverture (32).

13. Procédé de sérigraphie d'un élément chauffant (10) sur au moins une première face (8) d'un élément thermoconducteur (2) d'un bloc de chauffe (1) selon l'une des revendications 1 à 8, **caractérisé en ce qu'**il comprend les étapes suivantes :
- une couche diélectrique primaire est déposée sur la face de l'élément thermoconducteur qui sert de support à l'élément chauffant (10),
- la couche diélectrique primaire est vitrifiée,
- la piste résistive de l'élément chauffant (10) est déposée sur la face de l'élément thermoconducteur,
- la piste résistive de l'élément chauffant (10) est solidifiée,
- une couche diélectrique secondaire est déposée au moins sur l'élément chauffant (10) et sur toute la surface de l'élément thermoconducteur (2),
- la couche diélectrique secondaire est vitrifiée.

## Patentansprüche

1. Heizblock (1) eines elektrischen Strahlers zum Erhitzen eines Luftstroms, der in einer Lüftungs- und Heizanlage eines Fahrzeugs zirkuliert, in dem ein Wärmeleiterelement (2) wenigstens ein Loch (3) aufweist, durch das sich der zu erhitzende Luftstrom bewegt, **dadurch gekennzeichnet, dass** er auf wenigstens einer ersten Fläche (8) des Wärmeleiterelements (2) wenigstens ein Siebdruck-Heizelement (10) umfasst, wobei das Siebdruck-Heizelement (10) eine Dicke im Bereich von 0,05 bis 0,20 mm aufweist.

2. Heizblock nach Anspruch 1, wobei die erste Fläche (8) zu der Richtung des Luftstroms, der sich durch den Heizblock (1) bewegt, senkrecht ist.

3. Heizblock nach einem der Ansprüche 1 bis 2, wobei das Wärmeleiterelement (2) die Form einer Metallplatte mit einer Dicke im Bereich von 0,8 bis 1,2 mm annimmt, wobei der Heizblock eine primäre dielektrische Schicht aufweist, die zwischen die erste Fläche (8) des Wärmeleiterelements (2) und das Siebdruck-Heizelement (10) eingefügt ist.

4. Heizblock nach einem der vorhergehenden Ansprüche, wobei mehrere Löcher (3) und mehrere Siebdruck-Heizelemente (10) vorgesehen sind.

5. Heizblock nach einem der vorhergehenden Ansprüche, der eine sekundäre dielektrische Schicht umfasst, die das Siebdruck-Heizelement (10) bedeckt.

6. Heizblock nach einem der vorhergehenden Ansprüche, wobei das Wärmeleiterelement (2) wenigstens eine Erhebung (13) aufweist, auf die ein Versorgungsanschluss (16) des Siebdruck-Heizelements (10) durch Siebdruck ausgebildet ist.

7. Heizblock nach Anspruch 6, wobei die Erhebung (13) von dem Wärmeleiterelement (2) ausgeht und sich in einer Ebene parallel zu dem Wärmeleiterelement (2) erstreckt, wobei die Erhebung (13) wenigstens zwei Versorgungsanschlüsse (16) des Siebdruck-Heizelements (10) aufnimmt.

8. Heizblock nach einem der vorhergehenden Ansprüche, wobei ein Mittel (29) zum Detektieren der Temperatur des Siebdruck-Heizelements (10) auf dem Wärmeleiterelement (2) fest angebracht ist.

9. Elektrischer Heizstrahler für Kraftfahrzeug, **dadurch gekennzeichnet, dass** er einen Heizblock (1) nach einem der vorhergehenden Ansprüche umfasst.

10. Strahler nach Anspruch 9, **dadurch gekennzeichnet, dass** die Funktionsweise des Heizblocks (1) unter die Abhängigkeit von einem Steuermodul (28), das auf dem Wärmeleiterelement (2) fest angebracht ist, gestellt ist.

11. Strahler nach Anspruch 10, wobei das Steuermodul (28) eine gedruckte Schaltung (30) umfasst, die wenigstens eine elektrische Verbindungszone (31) aufweist, mit der wenigstens eine Erhebung (13) des Wärmeleiterelements (2) zusammenwirkt.

12. Strahler nach Anspruch 11, wobei die Verbindungszone (31) die Form einer Öffnung (32) annimmt, die durch die gedruckte Schaltung (30) verläuft, wobei die Erhebung (13) durch die Öffnung (32) verläuft.

13. Siebdruckverfahren für ein Heizelement (10) auf wenigstens einer ersten Fläche (8) eines Wärmeleiterelements (2) eines Heizblocks (1) nach einem der Ansprüche 1 bis 8, **dadurch gekennzeichnet, dass** es die folgenden Schritte umfasst:
- Ablagern einer primären dielektrischen Schicht auf der Fläche des Wärmeleiterelements, die als Träger für das Heizelement (10) dient,
- Verglasen der primären dielektrischen Schicht,
- Ablagern der Widerstandsbahn des Heizelements (10) auf der Fläche des Wärmeleiterelements,
- Verfestigen der Widerstandsbahn des Heizelements (10),
- Ablagern einer sekundären dielektrischen Schicht wenigstens auf dem Heizelement (10) und auf der gesamten Oberfläche des Wärmeleiterelements (2),
- Verglasen der sekundären dielektrischen Schicht.

## Claims

1. Heating block (1) for an electric radiator heating a stream of air flowing in a ventilation and heating installation of a vehicle, in which a heat conductive element (2) comprises at least one hole (3) through which the stream of air to be heated flows, **characterized in that** it comprises at least one screen printed heating element (10) on at least a first face (8) of the said heat conductive element (2), the screen printed heating element (10) having a thickness in the range between 0.05 and 0.20 mm.

2. Heating block according to Claim 1, in which the first face (8) is perpendicular to the direction of the stream of air flowing through the heating block (1).

3. Heating block according to either one of Claims 1 and 2, in which the heat conductive element (2) takes the form of a metal plate with a thickness in the range between 0.8 and 1.2 mm, the heating block comprising a primary dielectric layer interposed between the first face (8) of the heat conductive element (2) and the screen printed heating element (10).

4. Heating block according to any one of the preceding claims, in which a plurality of holes (3) and a multiplicity of screen printed heating elements (10) are provided.

5. Heating block according to any one of the preceding claims, comprising a secondary dielectric layer which covers the screen printed heating element (10).

6. Heating block according to any one of the preceding claims, in which the heat conductive element (2) comprises at least one protrusion (13) on which a power supply terminal (16) of the screen printed heating element (10) is screen printed.

7. Heating block according to Claim 6, in which the protrusion (13) comes out of the heat conductive element (2) and extends in a plane parallel to the heat conductive element (2), the protrusion (13) receiving at least two power supply terminals (16) of the screen printed heating element (10).

8. Heating block according to any one of the preceding claims, in which a means for detecting (29) the temperature of the screen printed heating element (10) is rigidly fixed onto the heat conductive element (2).

9. Electrical heating radiator for a motor vehicle, **characterized in that** it comprises a heating block (1) according to any one of the preceding claims.

10. Radiator according to Claim 9, **characterized in that** the operation of the heating block (1) is placed under the dependency of a control module (28) rigidly fixed onto the heat conductive element (2).

11. Radiator according to Claim 10, in which the control module (28) comprises a printed circuit (30) comprising at least one electrical connection region (31) with which at least one protrusion (13) of the heat conductive element (2) cooperates.

12. Radiator according to Claim 11, in which the connection region (31) takes the form of a opening (32) passing through the printed circuit (30), the said protrusion (13) extending through the opening (32).

13. Method for screen printing a heating element (10) on at least a first face (8) of a heat conductive element (2) of a heating block (1) according to one of Claims 1 to 8, **characterized in that** it comprises the following steps:
- a primary dielectric layer is deposited on the face of the heat conductive element used as a substrate for the heating element (10),
- the primary dielectric layer is vitrified,
- the resistive track of the heating element (10) is deposited on the face of the heat conductive element,
- la resistive track of the heating element (10) is solidified,
- a secondary dielectric layer is deposited at least on the heating element (10) and over the entire surface of the heat conductive element (2),
- the secondary dielectric layer is vitrified.
